# EUROPEAN PATENT SPECIFICATION

(11) **EP 0 756 685 B1**
(45) Date of publication and mention of the grant of the patent: **14.01.1998**
(21) Application number: 95914469.2
(22) Date of filing: 10.04.1995
(51) Int. Cl.: F16L 37/00

(54) **PIPE RESTRAINT ARRANGEMENT**
ANORDNUNG ZUR HALTERUNG EINES ROHRES
DISPOSITIF D'ASSUJETTISSEMENT DE TUYAUX

(30) Priority: 14.04.1994 GB 9407437
(43) Date of publication of application: 05.02.1997
(73) Proprietor: Walmsley, Owen, Clayton-Le-Woods Chorley Lancashire (GB); Emmett, Robert, Lancaster Lancashire (GB)
(72) Inventor: Walmsley, Owen, Clayton-Le-Woods, Chorley, Lancashire (GB)
(74) Representative: Ajello, Michael John
(86) International application number: GB9500817
(87) International publication number: WO9528595

(56) References cited:
- US-A- 3 393 926
- US-A- 3 843 167
- US-A- 4 078 832

## Description

This invention relates to restraining an elongate member with respect to a housing into which it extends from withdrawal therefrom and particularly, but not essentially, to releasably retraining two axially aligned elongate members, in the form of fluid pipes, with respect to a housing which surrounds their junctions as part of a fluid coupling.

It is known to restrain an elongate member, such as a pipe end, with respect to a body by providing a radially extending flange (or pipe gripping means having a similar effect) and bolting or otherwise securing the flange to a body or opposing pipe flange. In the case of pipes carrying fluid at elevated pressure there is a need to prevent fluid leakage and sealing means is provided between the end of such a pipe and an abutting body, or more usually around the pipe where it is spaced from another and opening into a chamber in a housing extending across the joint. In such instances the pipes are subjected to axial separating forces in operation due to hydrostatic end load from the fluid being carried and possibly temperature and other environmental effects. Thus to effect a fluid tight coupling it is usual for such end flanges or flange equivalents to be bolted to each other with the pipes effectively axially fixed with respect to each other such that the bolts are in tension and able to resist said hydrostatic loads as well as other loads which may tend to displace the pipe with respect to the seal and decrease its effectiveness.

Such joints are required for example between individual sections of large diameter pipeline which is laid on the sea bed. In such conditions where manual access is difficult, if not impossible, the use of such tensioned bolt members to pre load the seal members is unwelcome and hitherto it has been common practice to manoeuvre the pipe ends into abutment and create an artificial environment in which welded joints can be made. Apart from the difficulty, time and cost of doing this, such joint is not conducive to subsequent separation to permit simple replacement of a damaged section of pipeline.

It is also sometimes desirable to restrain an elongate member, such as a pipe, which has a plain end with respect to a separate flange, or the like anchored thereto by gripping means, when there is no axial loading, as provided by a completed flange joint.

Examples of such separately applied gripping means and joints involving the use of tensioned bolt members to enhance gripping are disclosed in patent specifications GB-B-2,155,577 and GB-B-2,188,690.

Notwithstanding the specific problem existing with respect to sub-sea pipes, they are representative of more general elongate members which may need to be coupled to each other and/or terminated and/or anchored to a body, and it is an object of the present invention to provide a restraint arrangement which is capable of remote operation. It is also an object of the present invention to provide a reliable coupling arrangement for two axially aligned elongate members, such as fluid pipes, which is capable of remote operation which overcomes limitations of known couplings. It is a further object of the present invention to provide a termination arrangement for an elongate member.

According to a first aspect of the present invention a restraint arrangement comprises (a) a housing having a longitudinal axis, a restraint cavity surrounding said axis and a radially inner wall, surrounding said restraint cavity, profiled over at least part of its axial length with a series of alternating radial projections and depressions, (b) restraint means disposed coaxially within the housing restraint cavity comprising (i) a restraint member, (ii) collet means comprising at least one axially extending portion of the restraint member having a radially outer surface inclined with respect to the longitudinal axis and a plurality of collet members arrayed about the restraint member, radially inwardly profiled to co-operate with said inclined portion of the restraint member and radially outwardly profiled to co-operate with said profiled radially inner wall of the housing, and (iii) collet bias means operable to bias the collet members axially with respect to the restraint member such that said inclined surfaces co-operate to displace the collet members radially outwardly into engagement with said wall of the housing, and
(c) setting means, operable to set the restraint means axially with respect to the housing, including (i) ram means operable to derive an axial thrust between the restraint member and the housing to drive the restraint means axially with respect to said radially inner wall of the housing, and (ii) collet bias override means operable to displace the collet members with respect to the restraint member against said collet bias means, said setting means being arranged at least in a setting mode to operate the ram means to drive the restraint means axially relative to the housing into a desired position and thereafter reduce said thrust to permit said collet bias means to drive the collet members by way of said inclined portions of the restraint member into engagement with the radially inner wall of the housing such that interengagement of the profile surfaces thereof prevents the restraint means from moving axially relative to the housing in a direction opposite to the biasing direction of the collet bias means.

Preferably the setting means is arranged to operate also in a release mode to cause the collet bias override means to cause the collet members to be spaced radially from the profiled inner wall of the housing and permit the restraint means to be displaced along the housing in the direction opposite to the biasing direction of the collet bias means.

In a restraint arrangement as defined in either preceding paragraph the series of alternating radial projections and depressions at the inner wall of the housing and the collet members preferably comprise a series of ridges and grooves extending substantially orthogonally to the longitudinal axis, and may be defined by a helical thread pattern.

The restraint arrangement according to any one of the three foregoing paragraphs may be specifically arranged for operatively receiving and restraining an elongate member, said housing having an elongate member receiving aperture extending axially from one end thereof and surrounded by said restraint cavity and said restraint means including an axially extending elongate member receiving cavity opening at a receiving end to receive a said elongate member secured to the restraint means against axial motion in a direction, opposite to the biasing direction of the collet means, towards said receiving end, said restraint member thereof comprising an annular form surrounding said receiving cavity moving axially relative to the sleeve in a direction towards said receiving end.

In accordance with a second aspect of the present invention a coupling arrangement for a pair of axially aligned elongate members comprises a restraint arrangement as defined in the preceding paragraph in which the housing is arranged to have said elongate members in opposite ends thereof.

In such a coupling arrangement each end of the housing may have associated therewith individual restraint means and setting means arranged to restrain each elongate member individually with respect to the housing. The individual setting means may be arranged to be operated simultaneously whereby forces exerted axially thereby are reacted against each other in the housing.

Such a coupling arrangement is particularly suited for use in respect of releasably coupling two axially aligned pipes, possibly sub-sea, wherein the arrangement may be disposed with one pipe and manoeuvred axially by remotely operative vehicle (ROV) to received the end of the other pipe before their restraint positions with respect of the housing are set by the ROV, preferably by supplying hydraulic pressure, and fluid seals to permit leakage are energised. Release and removal is the reverse of the above and may also be performed remotely by such ROV.

Embodiments of the invention will now be described by way oi example with reference to the accompanying drawings, in which:-
Figure 1(a) is a side view of two axially aligned pipes laid on the sea bed showing a coupling arrangement, in accordance with the present invention, carried in its initial disposition by one of the pipes and connected to a remotely operated vehicle for remotely manipulating the coupling arrangement,
Figure 1(b) is a side view similar to Figure 1(a) but showing the coupling arrangement in its final disposition bridging the two pipes prior to detachment of the ROV,
Figure 2 is a sectional elevation through one longitudinal half of the axially symmetrical coupling arrangement of Figure 1(a) with the restraint arrangement embodied therein in a release mode for sliding axially relative to the pipes,
Figure 3(a) is a sectional elevation similar to Figure 2 through one half of the coupling arrangement in the position of Figure 1(b) and with the restraint arrangement embodied therein set to effect fluid tight coupling between the pipes,
Figure 3(b) is a sectional elevation through a portion of the collet means and housing showing in greater detail the profiled surfaces,
Figure 4 is a sectional elevation through the prestressing spring arrangement of Figures 2 and 3, and
Figures 5(a) and 5(b) are simplified sectional elevations through termination arrangements for elongate members with pipe ends received therein, being respectively a removable pipe closure and a removable flange and
Figure 6 is a cross-sectional elevation through an alternative form of restraint arrangement for restraining tensile stress in a shank of a bolt or stud member.

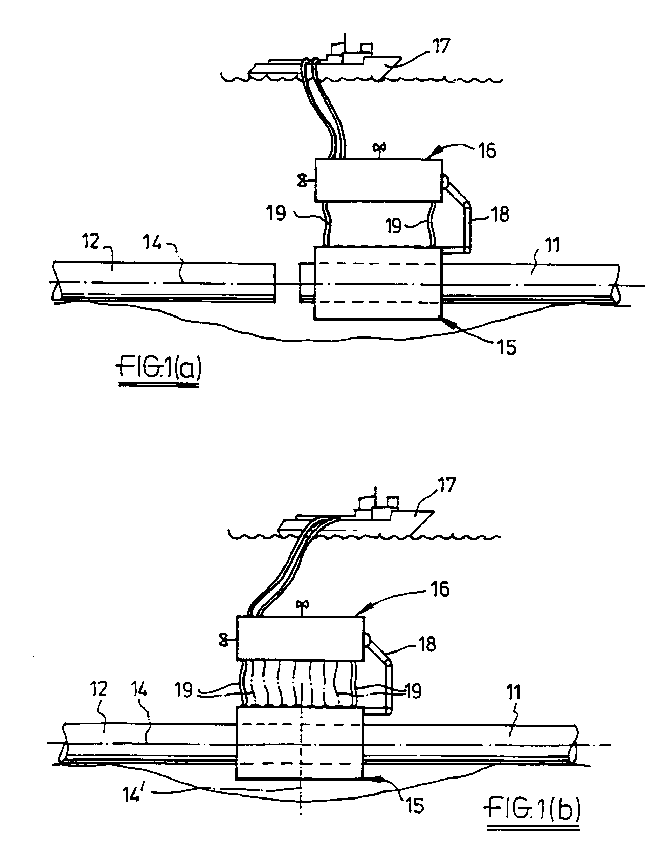

Referring to Figures 1(a) and 1(b), two elongate members 11 and 12 in the form of large diameter pipes for transporting hydrocarbon fluids are laid on the sea bed end to end and aligned to share a common longitudinal axis 14. The pipe 11 carries a coupling arrangement 15 in accordance with the present invention that has been slid onto the pipe before it was laid or before the pipe 12 was put in position. A remotely operated submersible vehicle (ROV) 16, coupled to, and controlled from, a surface vessel 17 has articulated limbs 18 by which to apply physical force to the coupling arrangement to move it, or functional components on it, and hydraulic (and/or electrical) lines 19 releasably connectable to the coupling arrangement by the limbs 18 to supply hydraulic (and/or electrical) pressure to the coupling arrangement.

Figure 1(b) differs from Figure 1(a) only in that it shows the coupling arrangement moved from the initial disposition of Figure 1(a) to a final coupling disposition by the ROV and prior to the ROV disconnecting the hydraulic (and/or electrical) connections before leaving the coupling arrangement.

It will be seen from Figures 1(a) and 1(b) that the coupling arrangement 15 is essentially annular in surrounding the pipes, sharing the longitudinal axis 14, and because of the identically plain ends of the pipes, is symmetrical about both the common longitudinal axis 14 and a transverse axis 14' through the centre of the coupling arrangement.

Each half of the coupling arrangement comprises a restraint arrangement for restraining an elongate member, such as the pipe 12, from retracting out of an end of the coupling arrangement into which it is received due to hydrostatic end loads placed on the pipe by fluids eventually transported thereby and or other mechanical and/or thermally induced axial forces.

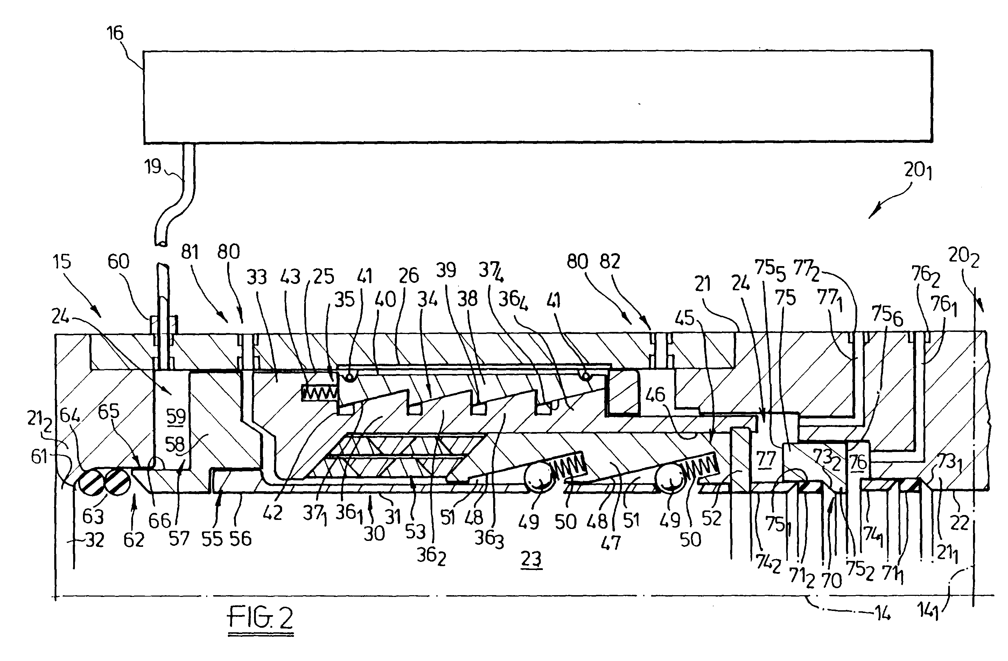

Referring to Figure 2 the coupling arrangement 15 comprises, each side of said transverse axis 14', a restraint arrangement 20₁ and 20₂ which are symmetrical about the axis. For convenience and clarity the following description is confined to the restraint arrangement 20₁.

The restraint arrangement 20₁ comprises an annular housing 21 having a central aperture 22 comprising an elongate member (pipe) receiving cavity 23 having a diameter just larger than the diameter of the pipe 12 to be received therein, and the pipe 11 which it surrounds.

Radially outwardly of the pipe receiving cavity 23 an annular restraint cavity 24 extends axially between the central part 21₁ near the transverse axis 14' and an end part 21₂ near the end of the housing. For a portion of the axial length of the restraint cavity the radially inner wall 25 of the housing has a surface profile 26 formed by a series of relatively shallow depth, fine pitch projection and recesses, conveniently formed by a sequence of near annularly extending grooves and ridges and preferably by a conventional helical engineering screw thread.

Restraint means, indicated generally at 30 is disposed coaxially within the housing and contained both axially and radially within the restraint cavity 24, having an axially extending pipe receiving aperture 31, common with a portion of the housing aperture 22, opening at what may conveniently be called a receiving end 32 to receive the pipe 12 and have it secured to the restraint means against substantial axial motion towards the receiving end.

The restraint means 30 comprises an annular restraint member 33 surrounding the pipe receiving aperture 31, collet means, indicated generally at 34 and collet bias means indicated generally at 35. The collet means 34 comprises, in the embodiment, four axially extending portions of the hub member 36₁.... 36₄, each having a radially outer surface 37₁, .... 37₄ respectively inclined with respect to the longitudinal axis in such a sense as to increase in distance from the axis with axial distance from the receiving end 32, and a plurality of collet members 38 (one only shown) arrayed about the restraint member. Each collet member is radially inwardly profiled at 39 to cooperate with the inclined portions of the hub member and radially outwardly profiled at 40 to co-operate with, that is, mesh with, the radially inner wall portion 26 of the housing.

The collet members 38 are loosely held with respect to each other by resilient rings 41. The collet bias means 35 comprises a recessed shoulder 42 on the restraint member facing axially towards the inclined surface portion 36₁ and a plurality of bias spring members 43 (only one shown) disposed between the shoulder and the collet members about axis 14; that is, the collet bias means causes the collet members to be axially driven radially outwardly into abutment with the radially inner wall portion 26 of the housing.

The restraint member 33 is required to be secured to the received elongate member, pipe 12, against retraction. To achieve this with a plain ended pipe received into the assembled restraint arrangement, the restraint means 30 includes an elongate member, that is, pipe, gripping means indicated generally at 45 disposed within an axially extending central gripping aperture 46 of the restraint member.

The gripping means comprises an annular gripping member 47 including a plurality of surfaces 48 arrayed about the longitudinal axis 14 and inclined with respect to that axis in such a sense as to increase in distance from the axis with axial distance from said receiving end 32. Each surface 48 supports a rolling element 49 in the form of a steel ball biased towards the receiving end 32 by an individual bias spring 50. The inclined surfaces 48 are defined by individual bores 51 in which the bias springs are contained and the rolling members are partially contained at the axially elongated interface with the member surface. The rolling elements extend radially outwardly of the gripping member such that with the axial displacement of the bias spring means they extend radially inwardly to the cavity 23 to engage any elongate member received. The rolling elements are displaceable axially and radially, with respect to the axis 14, against the bias springs to permit a pipe to be received into the receiving aperture 31 and under the action of the bias springs and frictional contact with such received pipe to effect wedging between the inclined surfaces and the pipe to secure it from relative motion towards the receiving end.

Such gripping means is essentially of the type disclosed in the aforementioned Patent specifications GB-B-2,155,577 and GB-B-2,188,690.

The gripping member 47 may be fixed axially with respect to the restraint member 33 but preferably, as shown, is slidable axially within cavity 46 but biased against an end stop 52 by a high rate prestressing spring means 53 described in greater detail hereinafter.

In order to displace the rolling elements axially out of wedging contact, both to ease initial reception of a pipe into the aperture and to permit intentional removal of such a pipe, the gripping means includes grip release means 55. The grip release means comprises a release sleeve 56, lining the gripping member and extending along the pipe receiving aperture 31 as a lining thereof, apertured to permit radial extension of the rolling members 49 between the gripping member surfaces 48 and a received pipe 12. It also comprises grip release energising means 57 which is operable in a grip release mode to slide the release sleeve 56 axially with respect to the gripping member in a direction away from the receiving end to displace the rolling elements 49 axially and, by way of said inclined surfaces 48, radially away from the longitudinal axis, and is operable in a gripping mode to permit or cause the release sleeve to slide axially with respect to the gripping member in a reverse direction to permit the rolling element to move radially into contact with a received elongate member.

The grip release energising means 57 comprises an annular grip release piston 58, extending radially between the release sleeve 56, to which it is secured, and the radially inner wall 25 of the housing, an annular grip release chamber 59, defined between the piston and the radially inwardly extending end wall 21₂ of the housing defining the end of the restraint cavity and connected to a releasable fluid connector 60 in the housing wall, and fluid supply means in ROV 16 coupled to the connector 60 by line 19. The grip release energising means is operable in said grip release mode to supply fluid at elevated pressure by way of line 19 to the grip release chamber to displace the piston 58 with respect to the end wall of the housing and slide the release sleeve axially away from the receiving end, and operable in said gripping mode to vent fluid pressure in the chamber to permit the piston and release sleeve to slide axially towards the end wall of the housing.

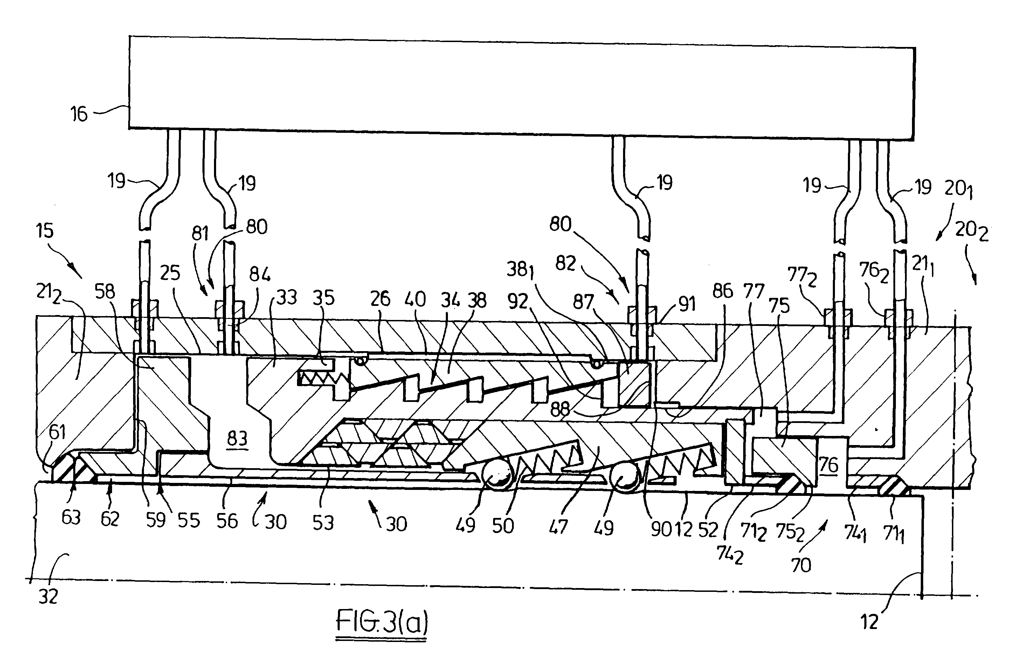

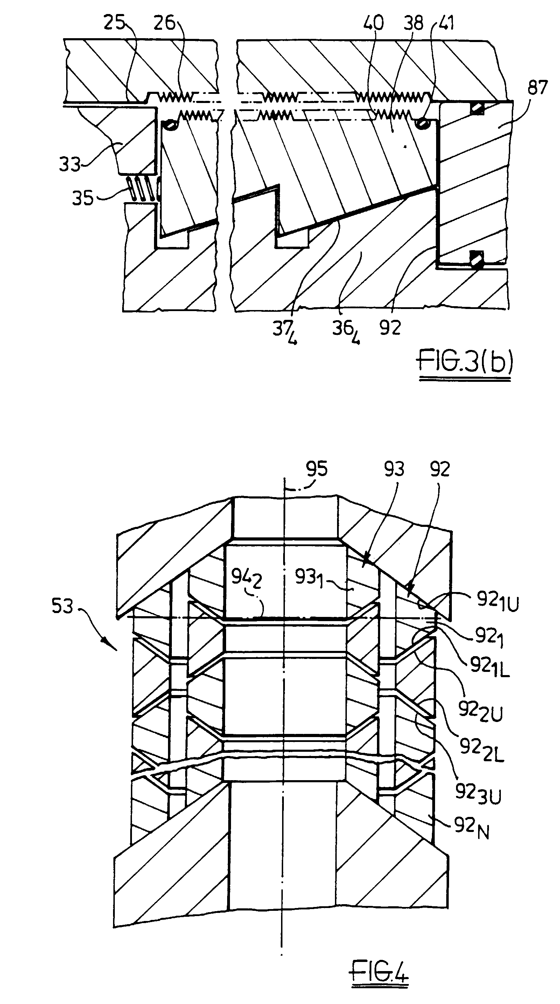

The end part 21₂ of the housing defines an annular gap 61 about a received pipe 12, best seen in Figure 3(a), and environmental sealing means 62 is provided which comprises an annular environmental sealing element 63 disposed adjacent the gap but recessed within an end part of the restraint cavity having a tapered wall 64 to surround the pipe receiving aperture. Environmental seal energising means 65 is operable as described hereinafter, to apply an axially directed thrust on the seal element to compress the element axially and radially to seal the gap 61 from the environment in which the housing and recessed pipe exist. The environmental seal energising means 65 includes an environmental seal energising sleeve 66 and an environmental seal energising piston which is secured to the sleeve, and conveniently provided by the grip release piston 58. The environmental seal and its energising means will also be discussed more fully below.

The restraint cavity 24 towards the end 21₁ of the housing contains energisable primary seal means 70 which includes, for example, two primary seal elements 71₁, 71₂ surrounding the pipe receiving aperture, bounded away from the receiving end by inclined surfaces 73₁, 73₂ respectively and towards the receiving end by annular, axially displaceable primary seal energising members 74₁, 74₂ each also have an inclined surface directed towards the respective elements. An annular primary seal energising piston 75 has a radially inner surface 75₁ supporting the seal element 71₂ and a part 75₂, joined thereto by said inclined surface 73₂, which radially overlies both primary seal elements. The piston 75 is exposed at axial faces 75₅ and 75₆ to annular chambers 76 and 77 respectively, the chambers being connected by respective ducts 76₁ and 77₁ to releasable fluid connectors 76₂ and 77₂ in order to receive fluid at elevated pressure from supply means in ROV 16 as described hereinafter.

The restraint arrangement 30 also comprises setting means, indicated generally at 80, by which operation is effected to set the restraint means and the gripped pipe axially with respect to the housing. The setting means 80 comprises ram means shown generally at 81 and collet bias override means shown generally at 82.

The coupling arrangement as thus far described and shown in Figure 2 demonstrates that each restraint arrangement 30 thereof surrounds each and any pipe with such a radial clearance, when the grip release means 55 is operated, as to permit the coupling arrangement to be slid by the ROV along the pipe 11 towards the pipe 12 and for the latter to be received in the pipe receiving cavity 23 of the housing and the aperture 31 in the restraint means. Figure 3 shows the coupling arrangement in its final disposition relative to the pipes 11 and 12 and in which the functional elements of the restraint arrangement are in such a position as to effect restraint on pipe 12 as a result of operation of the setting means 80, whose components, ram means 81 and collet bias override means 82, will first be described.

The ram means 81 comprises an annular ram chamber 83 defined between the radially inner wall 25 of the housing and the restraint means, in particular the release sleeve 56, and bounded in an axial direction away from the receiving end 32 by the restraint member 33 and axially in the direction towards the receiving end by the piston 58 of the grip release means/environmental seal energising means and end wall 21₂ of the housing. The ram chamber is connected by way of releasable fluid coupling 84 and fluid line 19 to a source of elevated fluid pressure within ROV 16.

The collet bias override means 82 comprises, within the restraint cavity 24 to one end of the collet members 38 remote from the receiving end 32 and between the radially inner wall 25 of the housing and a radially outer wall 86 of the restraint member 33, an annular override piston 87 and an annular override chamber 90 which is defined axially by the face 88 of override piston 87 and the housing part 21₁. The override piston is slidable axially into abutment with ends 38' of the collet members, and has a greater axially facing surface area provided by face 88 than is provided by the collet member ends 38'. The chamber 90 is connected by a releasable fluid coupling 91 and line 19 to a source of elevated pressure with ROV 16.

Having described the structure of all the parts of the restraint arrangement, its operation will be described firstly in respect of a setting mode, in which the pipe becomes restrained with respect to the housing as shown in Figures 3(a) and 3(b), and then in a release mode in which the pipe may be removed from the restraint means, or vice versa.

It will be appreciated that in the exemplary situation shown in Figures 1-3, pipes 11 and 12 having significant bulk and length can be considered as being anchored at some point remote from the ends associated with the coupling arrangement.

It will be appreciated that any axial forces applied to the components within the restraint cavity of the housing and reacted against the housing require that the housing is effectively anchored axially. To this end the coupling arrangement is arranged such that forces are applied equally and oppositely in both restraint arrangements of the coupling so that the housing may be considered as anchored axially.

As outlined above, with the coupling arrangement disposed as in Figure 2 and ready to receive the pipe 12 the ROV supplies fluid at elevated pressure to chamber 59 of grip release energising means 57 so as to slide the release sleeve 56 and retract the rolling elements 49 radially outwardly. The ROV then manipulates the coupling arrangement by sliding the housing 21 along the pipe until the pipe 12 is received within the cavity 23 of restraint arrangement 30 as seen in Figure 3.

At that time the chamber 59 is vented, permitting the grip release means to be displaced towards the end of the housing; the pressure exerted on the rolling elements 49 by the bias springs 50 may effect some displacement but operation is not dependant upon it. The ROV then energises the setting means 80 in its setting mode.

Fluid at elevated pressure is supplied to the chamber 90 of the collet bias override means 82 such that the piston 87 bears on the ends 38' of the collet members applying an axial force in a direction towards the pipe receiving end 32. Fluid at elevated pressure is supplied to the chamber 83 of the ram means, and applies axial pressure to both the piston 58 of the grip release means and the restraint member 33. The piston 58 is displaced axially against little resistance from the vented chamber 59 until in abutment with the end wall 21₂ of the housing when the release sleeve is so disposed with respect to the rolling elements 49 that they are able freely to engage with the pipe 12. As stated above, the piston 58 also comprises the energising piston for the environmental sealing means 62 and said displacement of the piston also causes the environmental sealing elements 63 to be driven radially and axially to seal gap 61 between the housing and pipe.

When the piston 58 abuts the housing wall and becomes effectively a part of the housing the fluid pressure in chamber 83 reacting against it produces an axial thrust on the end of the restraint member 33 which tends to move the restraint member axially with respect to the housing.

Referring also to Figure 3(b) which illustrates the collet means and collet bias override means in greater detail and with the housing and collet member profiling exaggerated, it will be seen that the bias override force alone as exerted by piston 87 is unable to displace the collet members with respect to the housing without firstly causing forces to be transferred radially into the restraint member and then axially back towards the piston 87. However, when the restraint member is displaced by the fluid pressure in ram chamber 83 the collet members are restrained axially by the collet bias override piston 87, permitting them to retract radially onto the restraint member and disengage from the housing wall and in effect displace axially with respect to the restraint member until in abutment with the radially upstanding shoulders between inclined surfaces 37₁ etc or collet bias means shoulder 42, or until radially upstanding shoulder 92 of the inclined portion abuts the collet override piston. The fluid pressure in override chamber 90 is controlled to permit the piston 87 to be pushed back by the axially directed force acting on the collet members or restraint member by the ram means. When the restraint member has reached its final axial position, discussed below, the pressure in override chamber 90 is vented, permitting the collet bias means to displace the collet members to the full axial extent with respect to the inclined portions of the restraint member so that they are expanded radially until the grooved outer surface 40 engage with the groove inner wall portion 26 of the sleeve to the extent permitted by the instantaneous groove alignment.

Thereafter, the fluid pressure in the ram chamber 83 is reduced permitting the axial position of the ram member to adjust a small amount, if necessary, as the collet members mesh fully with the housing wall under the action of the bias means and inclined surfaces of the collet means. It will be appreciated that the extent of such adjustment to the final position of the restraint member is dependant upon the pitch of the profiling to the collet members and the housing wall, a fine pitch in which a large number of load bearing surfaces interchange, providing both strength against axial forces and minimal final adjustment.

The above discussed final position of the restraint member in response to operation of the ram means results from the ram thrust acting by way of the restraint member upon the pipe gripping means 45.

As explained in the above-identified patent specifications directed to such gripping means per se, when a large axial force is applied to the gripping member 47 the rolling elements swage into the surface of the pipe to effect a very strong gripping action, such swaging inevitably causing some relative axial displacement from the point at which initial wedging occurs, the point to which the pipe is first received. Thus the position to which the restraint member is displaced by the ram means is basically dependant upon setting the final operative position of the gripping means relative to the pipe.

The final step after the setting means has located the housing, restraint means and pipe with respect to each other is to energise the primary seal means 70 to deform the primary seal elements. The ROV 16 supplies fluid at elevated pressure to chamber 77 which causes piston 75 to be displaced axially into contact with seal energising member 74₁ whereby the primary seal element 71₁ is compressed axially and, by way of the inclined faces of the energising member and housing, is deformed radially to bridge any gap between the bearing and the pipe 12. The chamber 77 is vented and the ROV supplies fluid at elevated pressure to chamber 76 which causes piston 75 to move in the opposite direction relative to, or carrying, primary seal element 712 into abutment with seal energising member 74₂ until the latter is in abutment with the end 52 of the restraint member. The seal element 71₂ is thus compressed axially by the inclined faces of the energising member and piston and is deformed radially to bridge any gap between the housing and pipe 12. The pressure in chamber 76 is also relieved and the line 19 disconnected.

It will be appreciated that material suitable for the primary seal elements may be plastically deformable or settable whereby it has little resilience to changes in position between the housing and received pipe.

Whereas it is always open to forces acting on the pipes 11 or 12 to upset their positional relationship with respect to each other and therefore with respect to the housing, such forces are unlikely to result from tensile forces in the pipes as considerable tension is exerted in securing the gripping means. However, there may be such movement if a gripped pipe is subjected to subsequent compressive loading, due for example to hydrostatic end loading of the pipe by fluid at elevated pressured carried in operation.

Such end loading of the pipe tends to force both pipes out of their respective restraint arrangements, and by way of the restraint means exerts tensile loading on the housing. Such tendency may tend to cause further swaging of the rolling members into the pipe if the gripping means is locked fast with respect to the housing or if the load is carried by a relatively thin housing wall as at 25, stretching of the housing. In either case, any significant axial displacement between the pipe and housing in the vicinity of the primary sealing means may be detrimental to the primary seal.

To mitigate such effects the high rate prestressing spring means 53 is disposed between the restraint member and the gripping means. The setting means 80 is arranged in the setting mode to drive the ram means such that the restraint member places the prestressing spring means in a predetermined degree of compression, greater than any axial forces anticipated by such subsequent end loading effects, when the gripping means is engaged to the pipe and before the collet means is operated to locate it with respect to the sleeve and the ram thrust released.
Whereas this places additional tensile stress in the housing wall 25 and gripping force on gripping member 47 the force is accommodated before the primary seal means 70 is energised.

If, in operation, further loading on the pipe is transferred into the gripping member its only effect is to lessen, but not remove, the compressive stress on the prestressing spring means and does not have effect on the restraint member or housing.

In particular, the axial relationship between the housing and the primary seal means 70 is undisturbed by any such forces occurring after the restraint means is set and the primary seals energised into sealing position with respect to the pipe so that sealing integrity is preserved.

It will be appreciated that the relationship between the restraint member and housing wall when the pipes 12 and 11 are subject to hydrostatic end load (with or without prestressing spring means 53) is such as to place the wall between opposite ends of the coupling arrangement in tension in a similar manner to which separate gripping members of a coupling described in the above-mentioned patent specifications are held with respect to each other by an array of tensioned bolt or stud members, but the use of which bolt or stud members is hereby avoided and operation permitted remotely by a ROV.

Having set the restraint arrangement for each part of the coupling arrangement in order to restrain the central part of the housing carrying the primary seals with respect to the pipes, it may be necessary at some future time to remove the coupling to expose the end of one or both pipes for maintenance or replacement of a pipe or the coupling arrangement itself.

To this end, and with the pipes empty or at least providing no hydrostatic end load, the setting means 80 is operated in a release mode. The ROV couples the lines 19 to connectors 91, 84 and 60 to provide pressure to the collet bias override chamber 90, ram chamber 83 and grip release energising chamber 59 respectively as required. With the override piston 87 forced against the ends of the collet members the ram chamber 83 is pressurised to drive the restraint means axially in order to relieve the axial forces between the collet members and the sleeve and (by overriding the collet bias) permitting the collet members to contract radially and out of engagement therewith. The pressure in the ram chamber is reduced to relieve axial loading on the prestressing spring means 53 and the gripping means after which the override chamber 90 may be vented. The grip release energising means is then operated by applying fluid at elevated pressure to chamber 59 so that the piston 58 is displaced, displacing fluid from ram chamber 83 and sliding the release sleeve 56 to displace the rolling members 49 radially clear of the pipe and the pipe receiving cavity.

The displacement of the piston 58 relieves radial pressure on the environmental sealing releasing elements 63. With no continuing axial pressure on the primary sealing elements 74₁ and 74₂ they offer little resistance to relative movement between the pipes and housing.

Thus the housing is readily made to slide along longitudinal axis 14 towards one pipe such that the other is retracted from it and the situation of Figure 2 re-established. The above described sequence may be repeated to reinstall the coupling with respect to the two pipes although it may be necessary to replace the primary seal elements 71, 72 (for each pipe) and possibly the environmental sealing element 63 first.

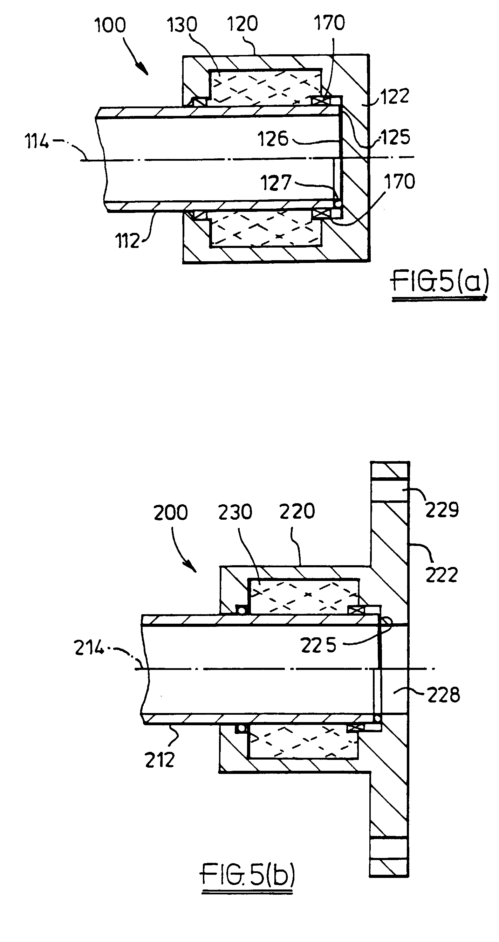

The prestressing spring element 53 described above has to receive high axial loads over a relatively short length and with little contraction in length. In operation it is required to restrain compressive stress whilst subjected to substantially constant axial loading for long periods of time and only exceptionally is required to change length. A suitable form of spring means is described in Figure 4.

The spring means 53 comprises two coaxial stacks 92, 93 each of N incompressible steel rings 91₁, 92₂ .... 92_{N} and 93₁, 93₂ .... 93_{N} respectively. For each stack, say 92, each ring has radially extending faces 92_{1U}, 92_{1L} individually and oppositely inclined with respect to a plane 94₂ normal to the longitudinal axis 95₁ thereof. The rings are stacked with their longitudinal axes 95₁, 95₂ .... aligned to form a stack axis 95 and with the parallelly inclined faces of adjacent rings in abutment (92_{1L} and 92_{2U}, 92_{2L} and 92_{3U} ...).

When each stack is subjected to compressive force in an axial direction, the inclined faces subject successive rings to hoop stresses in alternate radially inward and outward directions resulting in both a minor increase in the overall radial thickness of the column and a minor decrease in axial length.

By stressing each ring radially within its elastic limits, so that it restores radially when load is removed, the stack length also restores and thus behaves as compression spring means. It will be appreciated that compression and relaxation of the stack per se is effected by relative sliding of abutting faces of adjacent rings under axial loading, so that frictional effects give the spring means as a whole considerable hysteresis. Notwithstanding the possibility of employing friction-lessening materials at the interface between abutting rings, in use, the prestressing spring means is, as described above, operated such that it is effectively anchored with an initial degree of compression which is retained and is not affected by such friction. Clearly the number of rings in each stack, the number of stacks, the dimensions of individual rings and the slopes of the ring faces are open to variation to provide the desired characteristics for the spring means in whatever space is available.

It will be appreciated that the structure of the restraint means may be varied particularly in respect of the collet means detailed in Figure 3(b). that is, inclined surfaces of the restraint member, the interengaging profile of the collet members and inner wall of the housing and in respect of the collet means and collet bias override means.

The profiled surfaces of the housing and collet members are conveniently identical and, as described above each profiled by a conventional helical machine screw thread. Such arrangement provides for ease of manufacture whilst providing maximum number of engaging surfaces to maximise axial load bearing capacity and the possibility only of minor readjustment of restraint member position when the ram means is de-energised. It will further be appreciated that with the use of prestressing spring means 56 such that the restraint member is normally displaced to a position beyond that required simply to grip the pipe, the degree of restraint of position is less important provided the spring means remains compressively loaded and in such circumstances a coarser profile pitch may be employed.

In all situations the number of engaging positions on the collet members and housing wall may differ providing the total number of engagement position and the frequency (pitch) of engagement is adequate.

The profiled surface may comprise a series of ridges and grooves formed by other than such a continuous helically cut thread, for instance by a series of parallel annular ridges and grooves. Alternatively the profiled surfaces may be provided by individual projections and depressions individually limited in both axial and circumferential extent.

The profiles of the ridges (projections) and grooves (depressions) are also open to variation from that described and illustrated.

For instance, in the embodiment described with reference to Figures 2 and 3, wherein the collet bias override means comprises an axial force producing piston and cylinder operated in opposition to the ram means, the profiled surface of the housing may have the sides of the profile groove towards the receiving end perpendicular to the longitudinal axis to define a buttress thread for transferring maximum axial load with minimal radial component.

If the profiling does comprise grooves having side walls inclined at one or more acute angles to the longitudinal axis it will be appreciated that the camming effect of engagement between the profiled surfaces of the collet members may act as collet bias override means in the setting mode, effectively acting as a ratchet in which the grooves and ridges of the collet members ride over the grooves and ridges of the housing wall as the ram means displaces the restraint member to its final position. However, some form of active collet bias override means is required to permit operation in the release mode.

An alternative form of collet bias override means (not shown) may comprise means to inhibit the axial force exerted by the collet bias springs and permit the collet members retraining rings to contract the collet members radially and out of engagement with the housing wall prior to the restraining member reaching the final position in the setting mode and/or when the restraint member is displaced axially away from the receiving end by the ram means in the release mode.

The ram means, collet bias override means, grip release energising means and environmental seal energising means may all be effected other than by fluid pressure acting on a piston within a chamber defined thereby; such pistons may be replaced by rotary, electrical or fluid motors acting by way of screw drives or the like, or even 'manually' operated devices manipulated by the ROV limbs.

It will be appreciated that the above described example of a pipe coupling arrangement has features required in the particular circumstances of coupling two pipes remotely in a hostile environment as found sub-sea. The coupling arrangement may be employed to couple two elongate members which are not pipes, although features resulting principally from the need to seal against fluid leakage, primary sealing means 70, and hydrostatic end loads would then be unnecessary. Likewise, if the coupling arrangement is to be used on land the environmental sealing means may be omitted.

If the coupling means is to be installed only on a one-time basis, all the features of the setting means etc associated with release mode may be omitted.

It will be appreciated that although the coupling arrangement has been described with respect to two pipes 11 and 12 which are effectively fixed in position and relative to which the coupling arrangement is moved and against which axial forces can be exerted in setting the gripping means, it may be employed equally with pipes which are brought to, and received in, opposite ends of the housing, the pipes being brought into abutment with each other or a radially extending shoulder of the housing so that they are effectively actually anchored with respect to the housing and the axial forces exerted thereon in setting the gripping means are accommodated without disturbing the positions of the pipes.

Furthermore, if each pipe is actually anchored with respect to the housing by such a shoulder then both setting means need not be operated simultaneously.

The gripping means may be provided by means other than that described for receiving a plain pipe end. Alternatively, and depending largely upon the accessibility of the coupling for effecting partial assembly in situ, the gripping means may be permanently secured to the end of the pipe, for instance as a welded flange. Such an arrangement may, for example, be employed where the coupling arrangement is permanently carried by one pipe, such as pipe 11 in Figures 1(a) and (b), for the gripping means associated with that pipe.

The restraint means 30 described above may be employed other than in a coupling arrangement between two pipes or other elongate members. The restraint means may be employed to anchor an elongate member, possibly in tension, with respect to a body of which the housing is a part, or to terminate a single fluid carrying pipe as a closure means or as a removable flange means.

Figure 5(a) illustrates schematically such a pipe termination arrangement 100 in the form of a pipe closure. The pipe 112 is received within a restraint arrangement 130 corresponding to that 30 shown in relation to pipe coupling 15 with the exception that the housing 120 and 122 adjacent the end of the pipe and remotely from the receiving end, extends radially inwardly towards the longitudinal axis 114 to abut the end of the pipe and form both a receiving shoulder 125 for reacting axial thrusts in the housing generated by the ram means into the pipe and a closure wall 126 for the pipe. As illustrated, the restraint arrangement continues to employ the annular primary sealing means 170, corresponding to means 70 of Figures 2 and 3 although if desired, the primary seal means may be provided alternatively or additionally by a seal disposed axially between the end of the pipe and the closure wall 121, as indicated by ghosted lines 127.

Figure 5(b) illustrates a pipe termination 200 which does not close the end of the pipe but provides a separately fitted, and if necessary removable, flange means.

The structure is similar to the closure arrangement 100 except that the end wall 222 of housing 220 has a through-aperture 228 centred on axis 214 and conveniently, but not essentially, of the same diameter as received pipe 212 that leaves a receiving shoulder 225 for the pipe end. The end wall 222 also extends radially outwardly of the housing 220 and is provided with through-apertures 229 arrayed about a bolt circle, or equivalent fastening means, by which the flanged pipe may be bolted to another pipe or body with a suitable intervening sealing gasket. It will be appreciated that a termination arrangement in the form of such flange means may receive any other elongate member such as a bar or cable of any suitable cross-sectional shape, not necessarily circular, as the gripping means if of the above described type 45 is able to accommodate ovalities, to which a termination is required to attach the member to another body, splice two members or exert an axial load on the member to draw it along.

The restraint arrangement according to the present invention may be employed to restrain a member which is integral with the restraint member of the restraint means so that it is the restraint means which is restrained with respect to the housing. The restraint member may be elongate or not and extend from the housing and the setting means may be extemal to, and removably associated with, the restraint member and housing. Restraint may be provided against axial movement of the member with respect to the housing and deal with forces such as tension or gravity acting on the member within a supported housing, or vice versa.

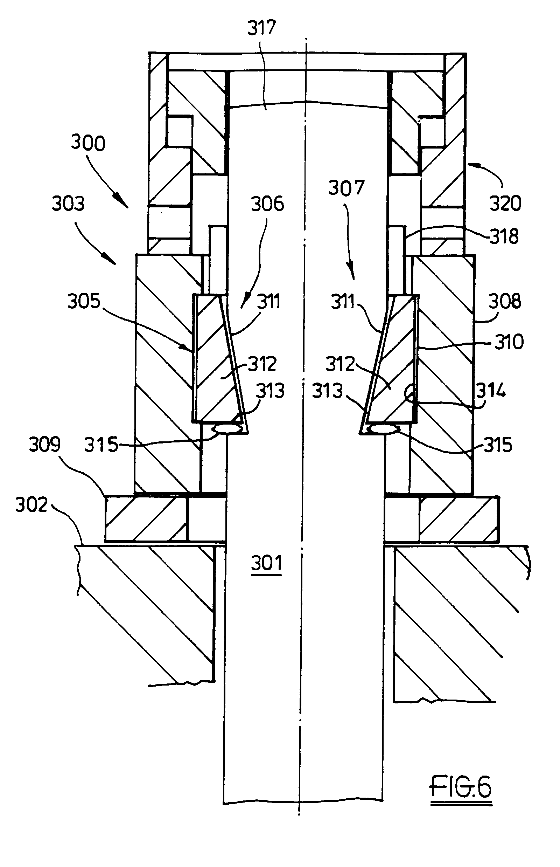

For example, Figure 6 shows a sectional elevation through a bolted joint 300 comprising a shank 301 of a bolt or stud protruding from a machine flange or the like 302. A restraint arrangement 303, to which the shank is adapted, is employed in place of a conventional nut to maintain the shank in tension so that compressive force is exerted on the flange 302.

The restraint arrangement comprises restraint means 305 including restraint member 306, formed by a part of the shank, collet means 307 and a housing 308 surrounding the collet means and supported on flange 302 conveniently by way of intervening washer means 309. The radially inwardly facing wall of the housing is profiled over at least part of its length at 310.

The collet means 307 includes at least one radially outwardly facing wall portion 311 of the shank inclined with respect to its longitudinal axis, collet members 312 arrayed about the inclined portion, being radially inwardly profiled at 313 to conform with the shank portion 312 and radially outwardly profiled at 314 to co-operate with the profiled wall 310 of the housing, and collet bias means 315, disposed between the collet members and the restraint member to apply an axially directed bias force, to drive the collet members into contact with the inclined portions of the shank and radially outwardly into engagement with the wall of the housing. The collet members may be restrained with respect to each other and slightly biased radially towards the longitudinal axis by restraining rings.

Preferably the co-operating profiled surfaces of the housing and collet members are fine pitch helical screw threads which permit the housing to be rotated with respect to the collet members.

In operation the shank may be fixed with the machine such that its free end 317, which carries a conventional screw thread, extends upwardly from flange 302. The collet members and bias means are disposed about the shank and the housing placed about the collet members and in engagement with the flange. The housing may be moved axially relative to the collet means by rotation of the interengaging screw threads, by applying an axial pressure to the housing to force the collet members against the bias means and permit them to ride out of profiled wall, or by including collet bias override means 318 which extend between the housing and shank and is forced axially against the collet members to apply a force overriding the bias directly.

With the washer means and housing bearing on the flange 302, ram means, in the form of conventional tensioning apparatus 320, is seated on the housing and in threaded engagement with the end 317 of the shank. The tensioning apparatus displaces the shank with respect to the housing to induce tension in the shank. The relative displacement between shank and housing is in the same direction as when the housing is installed and is performed with the collet members moved radially out of engagement with the housing by way of the same methods.

When the length of the tensioned shank has stabilised the collet bias means 315 restores engagement between the collet members and housing wall, so that when the force exerted by the tensioning apparatus is removed the tensile stress in the shank is retained by way of the inclined surfaces, collet members and housing, that is, with the shank (restraint means) in its new disposition.

Removal is effected by re-installing the tensioning apparatus to apply sufficient stress to the shank to relieve the radial pressure on the collet members and the bias override means is then operated to displace the collet members axially towards the flange and thus radially from engagement with the housing, whereupon the tensioning apparatus releases the stress from the shank, permitting it to contract axially with respect to the housing. The tensioning apparatus and, if necessary, the housing and shank can be removed.

Preferably the washer means 309 is of the spring type providing a prestressing axial bias to the housing 308 and placed into compression by the tensioning apparatus. The spring means may comprises a stack of rings as discussed hereinbefore.

It will be appreciated that if desired the washer means 309 may be omitted.

The co-operating profiled surfaces 310 and 314 may be other than a helical screw thread, taking one of the forms discussed hereinbefore.

Furthermore, the inclined surfaces 311 may be formed on projecting regions of the shank rather than as recesses therein.

It will be seen that the arrangement corresponds to the restraint arrangements described hereinbefore and similar variations in the form of restraint means, collet means, collet bias means and collet bias override means may be employed, for instance, instead of the setting means employing a separate tensioning apparatus it may be included within the housing to give a hydraulic nut arrangement.

The arrangement may correspond more closely to the restraint arrangement described hereinbefore by having the shank 301 shown in Figure 6 formed as a parallel-sided, threaded core portion which is received in a threaded sleeve carrying the inclined surfaces 311, such sleeve corresponding to a restraint member 33 of Figure 2 and the threaded interface to the gripping means 45 thereof.

## Claims

1. A restraint arrangement (20, 130, 230, 303) comprising
(a) a housing (21, 120, 220, 308) having a longitudinal axis (14, 114, 214), a restraint cavity (24) surrounding said axis and a radially inner wall (25), surrounding said restraint cavity, profiled over at least part of its axial length with a series of alternating radial projections and depressions (26, 310),
(b) restraint means (30, 305) disposed coaxially within the housing restraint cavity, comprising
(i) a restraint member (33, 306),
(ii) collet means (34, 307) comprising at least one axially extending portion of the restraint member (36₁-36₄) having a radially outer surface (37₁-37₄, 311) inclined with respect to the longitudinal axis and a plurality of collet members (38, 312) arrayed about the restraint member, radially inwardly profiled (39, 313) to co-operate with said inclined portion of the restraint member and radially outwardly profiled (40, 314) to co-operate with said profiled radially inner wall (126, 313) of the housing, and
(iii) collet bias means (35, 315) operable to bias the collet members (38, 312) axially with respect to the restraint member such that said inclined surfaces (36₁, 37₁; 311, 313) co-operate to displace the collet members radially outwardly into engagement with said wall of the housing, and
(c) setting means (80), operable to set the restraint means axially with respect to the housing, including
(i) ram means (81, 320) operable to derive an axial thrust between the restraint member (33, 306) and the housing (21, 308) to drive the restraint means (30, 305) axially with respect to said radially inner wall of the housing, and
(ii) collet bias override means (82, 318) operable to displace the collet members (38, 312) with respect to the restraint member (33, 306) against said collet bias means (307), said setting means being arranged at least in a setting mode to operate the ram means (81, 320) to drive the restraint means (30, 305) axially relative to the housing into a desired position and thereafter reduce said thrust to permit said collet bias means (35, 315) to drive the collet members (38, 312) by way of said inclined portions of the restraint member (36₁-36₄, 311) into engagement with the radially inner wall (26, 310) of the housing such that interengagement of the profile surfaces (26, 40; 310, 314) thereof prevents the restraint means (30, 306) from moving axially relative to the housing (21, 308)in a direction opposite to the biasing direction of the collet bias means (35, 315).

2. A restraint arrangement as claimed in claim 1 characterised in that the setting means (80) is arranged to operate also in a release mode to cause the collet bias override means (82, 318) to cause the collet members (38, 312) to be spaced radially from the profiled inner wall of the housing (26, 310) and permit the restraint means (36, 305) to be displaced along the housing in a direction opposite to the biasing direction of the collet bias means (35, 315).

3. A restraint arrangement as claimed in claim 1 or claim 2 characterised in that the collet bias override means (82,318) is arranged to displace the collet members (38, 312) axially with respect to the restraint member (33, 306).

4. A restraint arrangement as claimed in claim 3 when dependant on claim 2 characterised in that the setting means (80) is arranged in said release mode to operate the ram means (81, 320) to exert an axial thrust on the restraint member (33, 306) to displace it axially with respect to the inner wall (25) of the housing to relieve axial pressure between interengaged profiled surfaces (40, 26; 310, 314) of the collet members (40) and inner wall of the housing prior to radial disengagement of said profiled surfaces.

5. A restraint arrangement as claimed in claim 3 or claim 4 characterised in that the collet bias override means (82) comprises an annular override chamber (90), defined in the restraint cavity (24) to one end of said collet members (38) and between said radially inner wall of the housing (25) and a radially outer wall of the restraint member (33), and supply means (16, 19) operable to supply fluid at elevated pressure to the override chamber to effect a thrust on the collet members (38) in said direction opposite to the biassing direction of the collet bias means (35).

6. A restraint arrangement as claimed in any one of the preceding claims characterised in that said series of alternating radial projections and depressions at the inner wall of the housing (26, 310) and the collet members (40, 314) comprises a series of ridges and grooves extending substantially orthogonally to the longitudinal axis and defined by a helical thread pattern.

7. A restraint arrangement as claimed in any one of the preceding claims characterised in that the restraint means (30) includes an axially extending elongate member receiving cavity (23) opening at a receiving end (32) to receive an elongate member (12) secured to the restraint means (30) against axial motion in a direction, opposite to the biasing direction of the collet bias means (35), towards said receiving end, the restraint member (33) thereof comprising an annular form surrounding said member receiving cavity and elongate member gripping means (45) comprising an annular gripping member (47), containing said elongate member receiving cavity and adapted to releasably grip a said elongate member received therein.

8. A restraint arrangement as claimed in claim 7 characterised in that the gripping member (47) includes a plurality of surfaces (48), arrayed about the longitudinal axis and inclined with respect to the axis (14) in such a sense as to increase in distance from the axis with axial distance from said receiving end (32), supporting a roiling element (49) biased towards said receiving end and displaceable axially and radially with respect to said axis so as to secure an elongate member (12) extending along said aperture against substantial movement relative to the gripping member towards said receiving end by wedging between said inclined surfaces and said elongate member.

9. A restraint arrangement as claimed in claim 8 characterised in that the gripping means (45) includes grip release means (55) comprising a release sleeve (56) lining said gripping member (33) and apertured to permit radial extension of said rolling elements (49) between the gripping member (47) surface (48) and a said received elongate member (12), and grip release energising means (57) operable in a grip release mode to slide the release sleeve (56) axially with respect to the gripping member (47) in a direction away from said receiving end (32) to displace said rolling elements (49) axially and, by way of said inclined surfaces (48), radially away from the longitudinal axis (14), and operable in a gripping mode to permit the release sleeve (56) to slide axially with respect to the gripping member (47) in a reverse direction to permit said rolling elements (49) to move radially into contact with a said received elongate member (12).

10. A restraint arrangement as claimed in claim 9 characterised in that the grip release energising means (57) comprises within the restraint cavity (24) an annular grip release piston (58) extending radially between the release sleeve (56) and the radially inner wall of the housing (25), an annular grip release chamber (59) defined between the grip release piston (58) and the end (21₂) of the restraint cavity (24), and supply means (16, 19, 60) operable in said grip release mode to supply fluid at elevated pressure to said grip release chamber (59) to cause said grip release piston (58) and release sleeve (56) to slide axially away from the receiving end (32), and operate in said gripping mode to release fluid pressure in the grip release chamber (59) to permit said grip release piston (58) and release sleeve (56) to slide axially in a direction towards said receiving end (32).

11. A restraint arrangement as claimed in any one of claims 7 to 10 characterised in that the gripping member (47) is axially slidable with respect to the surrounding restraint member and coupled thereto in an axial direction by prestressing spring means (53).

12. A restraint arrangement as claimed in claim 11 characterised in that the setting means (80) is operable in said setting mode to cause the ram means (81) to displace the restraint member (33) axially with respect to the gripping member (47) to put said prestressing spring means (53) into axial compression and to remove the ram thrust in concert with permitting the collet members (38) to engage the housing wall (25, 26) to restrain the restraint member (33) axially with respect to the housing (21) with said prestressing spring means (53) in compression.

13. A restraint arrangement as claimed in claim 11 or claim 12 characterised in that the prestressing spring means (53) comprises at least one stack of rings (92, 93) each ring having the radially extending faces thereof (91_{1L}, 92_{1U}) inclined to each other and said inclined faces of adjacent rings oppositely inclined and abutting with each other over at least part of the rings circumference.

14. A restraint arrangement as claimed in any one of claims 7 to 13 characterised in which the elongate member receiving cavity (23) defines an annular gap (61) at the end of the restraint cavity (24) about a received elongate member and includes in said restraint cavity environmental sealing means (62) comprising an annular environmental sealing element (63) disposed in the restraint cavity adjacent said gap to permit reception of a said elongate member (12) into the housing and environmental seal energising means (58) operable to apply an axially directed thrust in the sealing element (63) to compress the element axially and radially with respect to the longitudinal axis, the environmental seal energising means comprising an annular environmental seal energising sleeve (66), an environmental seal energising piston (58) extending radially between the radially inner wall (25) of the housing and the energising sleeve, an environmental seal energising chamber, bounded in an axial direction towards said sealing element by said piston, and supply means (84, 19, 16) operable to supply fluid at elevated pressure to the chamber (83) to displace the sleeve axially against the sealing element.

15. A restraint arrangement as claimed in any one of claims 7 to 14 characterised in that the housing includes annular energisable primary seal means (70) disposed axially inwardly of the restraint means (30) and operable subsequently to setting of the restraint means (30) with respect to the housing (21) and a said elongate member (12) extending therethrough to effect an annular seal between the elongate member and the housing.

16. A restraint arrangement as claimed in claim 15 characterised in that the energisable primary seal means comprises an annular deformable primary seal element (71₁, 71₂) disposed within the restraint cavity (24) and an axially displaceable annular primary seal energising piston (75) responsive to fluid at elevated pressure to be displaced axially with respect to the housing (21) to deform the primary seal element into any annular gap to bridge the elongate member receiving cavity between the received elongate element and the housing.

17. A restraint arrangement as claimed in any one of claims 5, 10, 14 or 16 or any claim dependant thereon characterised in that each fluid chamber (59, 83, 90, 76, 77) is connected to a remotely actuable releasable fluid connector (60, 84, 91, 76₂, 77₂) at the wall of the housing and each supply means for fluid at elevated pressure is remote from the housing (16).

18. A coupling arrangement (115) for two axially aligned elongate members (11, 12) characterised by comprising a restraint arrangement (20₁, 20₂) as claimed in any one of claims 7 to 17 in which the housing (21) is arranged to house said elongate members in opposite ends thereof, each end of the housing having associated therewith, in an individual restraint chamber (24), individual restraint means (30) and setting means (80) arranged to restrain each elongate member individually with respect to the housing, and said individual setting means (80) are arranged to be operated simultaneously such that forces exerted axially thereby on the housing (20₁, 20₂) are reacted against each other in the housing.

19. A termination arrangement (100, 200) for an elongate member (112, 212) comprising a restraint arrangement (120, 220) as claimed in any one of claims 7 to 17 characterised in that the housing (122, 222) remotely from said receiving end extends radially inwardly of the elongate member receiving aperture towards said longitudinal axis (114, 214) to form an elongate member receiving shoulder (125, 225) and extending outwardly to provide a flange (222) or equivalent for securing to another body.

20. A pipe termination arrangement (100) comprising a restraint arrangement as claimed in claim 15 or claim 16 in which the housing remotely from said receiving end extends radially towards said longitudinal axis to abut and form a closure wall (126) for the end of a pipe received in the elongate member receiving aperture and form a receiving shoulder (125) for reacting axial thrust in the housing generated by the ram means into the pipe (112).

## Patentansprüche

1. Halterungsanordnung (20, 130, 230, 303) bestehend aus:
(a) einem eine Längsachse (14, 114, 214) aufweisenden Gehäuse (21, 120, 220, 308), einem um diese Achse angeordneten Halterungshohlraum (24) und eine um diesen Halterungshohlraum angeordnete radiale Innenwandung (25), über mindestens einen Teil der Längsachse mit einer Reihe abwechselnder radialer Vorsprünge und Einbuchtungen (26, 310) versehen,
(b) koaxial innerhalb des Halterungshohlraums angeordneten Halterungsmitteln (30, 305) mit:
(i) einem Halterungselement (33, 306)
(ii) Spannzangenmittel (34, 307), bestehend aus mindestens einem sich axial erstreckenden Teil des Halterungselements (36₁,-36₄) mit einer radialen Außenfläche (37₁-37₄, 311), die zur Längsachse geneigt ist, und eine Vielzahl von Spannzangenelementen (38, 312), die um das Halterungselement angeordnet sind, und die radial nach innen gerillt sind (39, 313), um mit dem geneigten Teil des Halterungselements zusammenzuwirken, und die radial nach außen gerillt sind (40, 314), um mit der gerillten radialen Innenwandung (126, 313) des Gehäuses zusammenzuwirken, und
(iii) Spannzangenvorspannmitteln (35, 315) die zum axialen Vorspannen der Spannzangenelemente (38, 312) in bezug zu dem Halterungselement betreibbar sind, derart, daß die geneigten Flächen (36₁, 37₁; 311, 313) so zusammenwirken, daß die Spannzangenelemente radial nach außen in Eingriff mit der Wandung des Gehäuses verschoben werden, und
(c) Einstellmitteln (80), die zum axialen Einstellen der Halterungsmittel in bezug zum Gehäuse betreibbar sind, mit:
(i) Eintreibmitteln (81, 320), die derart betreibbar sind, daß ein Axialschub zwischen dem Halterungselement (33, 306) und dem Gehäuse (21, 308) abgeleitet wird, um die Halterungsmittel (30, 305) axial in bezug zur radialen Innenwandung des Gehäuses anzutreiben, und
(ii) Mittel zum Außerkraftsetzen der Spannzangenvorspannung (82, 318), die derart betreibbar sind, daß die Spannzangenelemente (38, 312) in bezug auf das Halterungselement (33, 306) gegen die Spannzangenvorspannmittel (307) verschoben werden, wobei die Einstellmittel mindestens in einem Einstellbetrieb zum Betreiben der Eintreibmittel (81, 320) angeordnet sind, um die Halterungsmittel (30, 305) axial in bezug zum Gehäuse in eine gewünschte Stellung zu bringen und danach den Schub zu reduzieren, so daß die Spannzangenvorspannmittel (35, 315) in der Lage sind, die Spannzangenelemente (38, 312) mittels der geneigten Bereiche des Halterungselements (36₁-36₄) in Eingriff mit der radialen Innenwandung (26, 310) des Gehäuses zu bringen, so daß das Ineinandergreifen der Profilflächen (26, 40; 310, 314) die Halterungsmittel (30, 306) daran hindert, sich axial in bezug zum Gehäuse (21, 308) in entgegengesetzter Richtung zur Vorspannrichtung des Spannzangenvorspannmittels (35, 315) zu bewegen.

2. Halterungsanordnung nach Anspruch 1, dadurch gekennzeichnet, daß die Einstellmittel (80) derart angeordnet sind, daß sie auch in einer Freigabebetriebsart betreibbar sind, damit die Mittel zum Außerkraftsetzen der Spannzangenvorspannung (82, 318) auf die Spannzangenelemente (38, 312) derart wirken, daß diese von der gerillten Innenwandung des Gehäuses (26, 310) radial beabstandet werden, so daß die Halterungselemente (36, 305) entlang des Gehäuses in einer Richtung verschiebbar sind, die entgegengesetzt zur Vorspannrichtung der Spannzangenvorspannmittel (35, 315) sind.

3. Halterungsanordnung nach Anspruch 1 oder nach Anspruch 2, dadurch gekennzeichnet, daß die Mittel zum Außerkraftsetzen der Spannzangenvorspannung (82, 318) derart angeordnet sind, daß die Spannzangenelemente (38, 312) axial in bezug zu dem Halterungselement (33, 306) verschiebbar sind.

4. Halterungsanordnung nach Anspruch 3, und, soweit auf Anspruch 2 beruhend, dadurch gekennzeichnet, daß die Einstellmittel (80) in einem Freigabebetrieb derart angeordnet sind, daß die Eintreibmittel (81, 320) einen Axialschub auf das Halterungselement (33, 306) ausüben, um dieses axial in bezug zur Innenwandung (25) des Gehäuses zu verschieben, um Axialdruck zwischen den sich in Eingriff befindlichen gerillten Flächen (40, 26; 310, 314) der Spannzangenelemente (40) und der Innenwandung des Gehäuses vor dem radialen Trennen dieser gerillten Flächen abzubauen.

5. Halterungsanordnung nach Anspruch 3 oder nach Anspruch 4, dadurch gekennzeichnet, daß die Mittel zum Außerkraftsetzen der Spannzangenvorspannung (82, 318) eine ringförmige Außerkraftsetzungskammer (90) umfassen, die im Halterungshohlraum (24) an einer Seite der Spannzangenelemente (38) und zwischen der radialen Innenwandung des Gehäuses (25) und einer radialen Außenwandung des Halterungselements (33) ausgebildet ist, sowie Versorgungsmittel (16, 19), die derart betreibbar sind, daß Flüssigkeit bei erhöhtem Druck zur Außerkraftsetzungskammer befördert wird, so daß ein Druck auf die Spannzangenelemente (38) in der Richtung ausgeübt wird, die zur Vorspannrichtung der Spannzangenvorspannmittel (35) entgegengesetzt ist.

6. Halterungsanordnung nach einem der vorgenannten Ansprüche, dadurch gekennzeichnet, daß die Reihe der abwechselnden radialen Vorsprünge und Einbuchtungen an der Innenwandung des Gehäuses (26, 310) und der Spannzangenelemente (40, 314) eine Reihe von Stegen und Nuten umfaßt, die sich im wesentlichen orthogonal zur Längsachse erstrecken und als Schraubengewindemuster ausgebildet sind.

7. Halterungsanordnung nach einem der vorgenannten Ansprüche, dadurch gekennzeichnet, daß das Halterungsmittel (30) an einer Aufnahmeseite (32) einen sich axial erstreckenden Hohlraum (23) zur Aufnahme eines Langkörpers umfaßt, um einen Langkörper (12) aufzunehmen, der an den Halterungsmitteln (30) gegen axiale Bewegung in einer Richtung gesichert ist, die entgegen der Vorspannrichtung der Spannzangenvorspannmittel (35) verläuft, und zwar in Richtung der Aufnahmeseite, wobei das Halterungselement (33) eine Ringform umfaßt, die diesen Aufnahmehohlraum sowie Langkörper-Greifmittel (45) umgibt, die aus einem ringförmigen Greifelement (47) bestehen, das den Aufnahmehohlraum für den Langkörper enthält und derart ausgeprägt ist, daß es eines der darin aufgenommenen Elemente lösbar greift.

8. Halterungsanordnung nach Anspruch 7, dadurch gekennzeichnet, daß das Greifelement (47) eine Vielzahl von Flächen (48) umfaßt, die um die Längsachse angeordnet und derart zur Längsachse (14) geneigt sind, daß deren Achsenabstand sich mit dem Achsenabstand zur Aufnahmeseite (32) vergrößert, wobei sie sich auf einem Rollenelement (49) abstützen, das gegen die Aufnahmeseite vorgespannt ist und in bezug zu der Achse axial und radial verschiebbar ist, um somit einen sich durch diese Öffnung erstreckenden Langkörper (12) gegen eine wesentliche Bewegung relativ zu dem Greifelement in Richtung der Aufnahmeseite festzuhalten, indem der Langkörper zwischen den geneigten Flächen verkeilt wird.

9. Halterungsanordnung nach Anspruch 8, dadurch gekennzeichnet, daß das Greifelement (45) Griff-Freigabemittel (55) umfaßt, die aus einem Freigabekeil (56) bestehen, der auf dem Greifelement (33) aufliegt und mit Öffnungen versehen ist, so daß sich die Rollenelemente (49) zwischen der Fläche (48) des Greifelements (47) und einem aufgenommenen Langkörper (12) radial verschieben können, sowie Griff-Freigabeaktivierungsmittel (57) die in einer Griff-Freigabebetriebsart betreibbar sind, um den Freigabekeil (56) axial in bezug zum Greifelement (47) in einer Richtung weg von der Aufnahmeseite (32) zu verschieben, so daß die Rollenelemente (49) axial und, mittels der geneigten Flächen (48) radial weg von der Längsachse (14) verschiebbar sind, und die in einem Greifbetrieb betreibbar sind, um den Freigabekeil (56) axial in bezug zum Greifelement (47) in einer umgekehrten Richtung zu verschieben, so daß die Rollenelemente (49) radial in Kontakt mit dem aufgenommenen Langkörper (12) verschiebbar sind.

10. Halterungsanordnung nach Anspruch 9, dadurch gekennzeichnet, daß die Griff-Freigabeaktivierungsmittel (57) innerhalb des Halterungshohlraums (24) einen ringförmigen Griff-Freigabekolben (58) umfassen, der sich radial zwischen dem Freigabekeil (56) und der radialen Innenwandung des Gehäuses (25) erstreckt, eine ringförmige Griff-Freigabekammer (59), die zwischen dem Griff-Freigabekolben (58) und der Seite (21₂) des Halterungshohlraums (24) ausgebildet ist, und Versorgungsmittel (16, 19, 60), die in der Griff-Freigabebetriebsart betreibbar sind, um Flüssigkeit mit erhöhtem Druck in die Griff-Freigabekammer (59) zu geben, so daß der Griff-Freigabekolben (58) und der Freigabekeil (56) sich axial weg von der Aufnahmeseite (32) verschieben, und die in einer Griffbetriebsart betreibbar sind, um Flüssigkeit aus der Griff-Freigabekammer (59) zu entlassen, so daß sich der Griff-Freigabekolben (58) und der Freigabekeil (56) axial zur Aufnahmeseite (32) verschieben.

11. Halterungsanordnung nach Anspruch 7 bis 10, dadurch gekennzeichnet, daß das Greifelement (47) axial in bezug zu dem umgebenden Halterungselement verschiebbar ist und in axialer Richtung durch Vorspannfedermittel (53) daran gekoppelt wird.

12. Halterungsanordnung nach Anspruch 11, dadurch gekennzeichnet, daß die Einstellmittel (80) in dem Einstellbetrieb derart betreibbar sind, daß die Eintreibmittel (81) das Halterungselement (33) axial in bezug zum Greifelement (47) verschieben, so daß die Vorspannfedermittel (53) axial komprimiert werden und den Eintreibschub abbauen, wobei gleichzeitig die Spannzangenelemente (38) in die Gehäusewandung (25, 26) eingreifen, um das Halterungselement (33) axial in bezug zum Gehäuse (21) festzuhalten, und wobei die Vorspannfedermittel (53) zusammengedrückt sind.

13. Halterungsanordnung nach Anspruch 11 oder nach Anspruch 12, dadurch gekennzeichnet, daß die Vorspannfedermittel (53) mindestens einen Ringstapel (92, 93) umfassen, wobei deren radial verlaufende Seiten (91???_{1L}, 92_{1U}) jedes Ringes jeweils zueinander geneigt sind, und wobei die geneigten Seiten benachbarter Ringe zueinander geneigt sind und zumindest über einen Teil des Ringumfangs aneinander anliegen.

14. Halterungsanordnung nach einem der Ansprüche 7 bis 13, dadurch gekennzeichnet, daß der Hohlraum (23) zur Aufnahme eines Langkörpers einen Ringspalt (61) an der Seite des Halterungshohlraums (24) um einen aufgenommenen Langkörper bildet und in diesem Halterungshohlraum Raumabdichtmittel (62) beinhaltet, die aus einem ringförmigen Raumdichtelement (63) bestehen, das in dem Halterungshohlraum neben dem Spalt angeordnet ist, um die Aufnahme des Langkörpers (12) in das Gehäuse zu ermöglichen, sowie Raumdichtungs-Aktivierungsmittel 65, die derart betreibbar sind, daß sie einen axial gerichteten Schub in dem Raumdichtelement (63) aufbauen, um das Element axial und radial in bezug zur Längsachse zu komprimieren, wobei die Raumdichtungs-Aktivierungsmittel einen ringförmigen Raumdichtungs-Antriebskeil (66), einen sich radial zwischen der radialen Innenwandung (25) des Gehäuses und dem Antriebskeil erstreckenden Raumdichtungs-Antriebskolben (58), eine in axialer Richtung zum Dichtelement durch diesen Kolben begrenzte Raumdichtungs-Antriebskammer und Versorgungsmittel (84, 19, 16) umfassen, die derart betreibbar sind, daß Flüssigkeit bei erhöhtem Druck zur Kammer (83) gefördert wird, um den Keil axial gegen das Dichtelement zu verschieben.

15. Halterungsanordnung nach einem der Ansprüche 7 bis 14, dadurch gekennzeichnet, daß das Gehäuse ringförmige, antreibbare Primärdichtmittel (70) umfaßt, die axial nach innen zum Halterungsmittel (30) angeordnet sind und nacheinander derart betreibbar sind, daß das Halterungsmittel (30) in bezug zum Gehäuse (21) und zu einem sich dadurch erstreckenden Langkörper (12) eingestellt wird, um eine ringförmige Abdichtung zwischen dem Langkörper und dem Gehäuse zu bewirken.

16. Halterungsanordnung nach Anspruch 15, dadurch gekennzeichnet, daß die antreibbare Primärdichtung ein ringförmiges, verformbares Primärdichtungselement (71₁, 71₂) umfaßt, das innerhalb des Halterungshohlraums (24) angeordnet ist, sowie einen axial verschiebbaren ringförmigen Primärdichtungs-Antriebskolben (75), der auf Flüssigkeit mit erhöhtem Druck anspricht, und dadurch axial in bezug zum Gehäuse (21) verschiebbar ist, um das Primärdichtungselement zu einem ringförmigen Spalt zu verformen, so daß der Hohlraum zur Aufnahme des Langkörpers zwischen dem aufgenommenen Langkörper und dem Gehäuse überbrückt wird.

17. Halterungsanordnung nach einem der Ansprüche 5, 10, 14 oder 16 oder einem davon abhängigen Anspruch, dadurch gekennzeichnet, daß jede Flüssigkeitskammer (59, 83, 90, 76, 77) mit einem fernbedienbaren Flüssigkeitsausströmanschluß (60, 84, 91, 76₂, 77₂) an der Wandung des Gehäuses verbunden ist, und daß jedes Versorgungsmittel für die unter erhöhtem Druck stehende Flüssigkeit zum Gehäuse (16) beabstandet ist.

18. Kupplungsanordnung (115) für zwei axial ausgerichtete Langkörper (11, 12), dadurch gekennzeichnet, daß sie eine Halterungsanordnung (20₁, 20₂) gemäß einem der Ansprüche 7 bis 17 umfaßt, in der das Gehäuse (21) derart angeordnet ist, daß es die Langkörper an darin sich gegenüberliegenden Seiten aufnimmt, wobei jeder Seite des Gehäuses in einer einzelnen Halterungskammer (24) einzelne Halterungsmittel (30) und Einstellmittel (80) zugeordnet sind, die derart angeordnet sind, daß jeder Langkörper einzeln in bezug zum Gehäuse gehalten wird, und wobei die einzelnen Einstellmittel (80) derart angeordnet sind, daß sie gleichzeitig so betreibbar sind, daß davon auf das Gehäuse (20₁, 20₂) wirkende Axialkräfte im Gehäuse gegeneinander wirken.

19. Abschlußanordnung (100, 200) für einen Langkörper (112, 212), eine Halterungsanordnung (120, 220) nach einem der Ansprüche 7 bis 17, dadurch gekennzeichnet, daß sich das Gehäuse (122, 222) an der der Aufnahmeseite gegenüber liegenden Seite radial und innerhalb der Langkörper-Aufnahmeöffnung in Richtung der Längsachse (114, 214) erstreckt und eine Langkörper-Aufnahmeschulter (125, 225) bildet, und das sich außen derart erstreckt, daß ein Flansch (222) oder eine andere entsprechende Anordnung zur Befestigung an einer anderen Vorrichtung bereitgestellt wird.

20. Rohrabschlußanordnung (100) aus einer Halterungsanordnung nach Anspruch 15 oder 16, in der sich das Gehäuse auf der zur Aufnahmeseite gegenüberliegenden Seite radial in Richtung der Längsachse erstreckt und die eine bündige Abschlußwand (126) für die Seite des in der Langkörperaufnahme aufgenommenen Rohres bildet und die eine Aufnahmeschulter (125) bildet, um den Axialschub in dem Gehäuse aufzunehmen, der durch die Eintreibmittel im Rohr (112) erzeugt wird.

## Revendications

1. Dispositif de retenue (20, 130, 230, 303) comprenant :
(a) un boîtier (21, 120, 220, 308) comportant un axe longitudinal (14, 114, 214), une cavité de retenue (24) entourant ledit axe et une paroi interne radialement (25), entourant ladite cavité de retenue, profilée sur au moins une partie de sa longueur axiale par une série de projections et d'évidements radiaux alternés (26, 310),
(b) un moyen de retenue (30, 305) disposé coaxialement au sein de la cavité de retenue du boîtier, comprenant
(i) un organe de retenue (33, 306),
(ii) un moyen de douille (34, 307) comprenant au moins une portion s'étendant axialement de l'organe de retenue (36₁ - 36₄) comportant une surface externe radialement (37₁ - 37₄, 311) inclinée par rapport à l'axe longitudinal et une pluralité d'organes de douille (38, 312) agencés autour de l'organe de retenue, profilés radialement vers l'intérieur (39, 313) pour coopérer avec ladite portion inclinée de l'organe de retenue et profilés radialement vers l'extérieur (40, 314) pour coopérer avec ladite paroi interne radialement profilée (26, 310) du boîtier, et
(iii) un moyen de sollicitation de douille (35, 315) adapté à solliciter les organes de douille (38, 312) axialement par rapport à l'organe de retenue de manière que lesdites surfaces inclinées (36₁, 37₁; 311, 313) coopèrent pour déplacer les organes de douille radialement vers l'extérieur en engagement avec ladite paroi du boîtier, et
(c) un moyen de réglage (80) adapté à régler le moyen de retenue axialement par rapport au boîtier, comprenant
(i) un moyen de coulisseau (81, 320) adapté à dériver une poussée axiale entre l'organe de retenue (33, 306) et le boîtier (21, 308) pour entraîner le moyen de retenue (30, 305) axialement par rapport à ladite paroi interne radialement du boîtier, et
(ii) un moyen d'asservissement de sollicitation de douille (82, 318) adapté à déplacer les organes de douille (38, 312) par rapport à l'organe de retenue (33, 306) à l'encontre dudit moyen de sollicitation de douille (35, 315), ledit moyen de réglage étant placé au moins dans un mode de réglage afin actionner le moyen de coulisseau (81, 320) pour entraîner le moyen de retenue (30, 305) axialement par rapport au boîtier dans une position souhaitée puis réduire ladite poussée pour permettre audit moyen de sollicitation de douille (35, 315) d'entraîner les organes de douille (38, 312) au moyen desdites portions inclinées de l'organe de retenue (36₁ - 36₄ ; 311) en engagement avec ladite paroi interne radialement profilée (26, 310) du boîtier de manière que l'engagement mutuel de leurs surfaces profilées (26,40 ; 310, 314) empêche que le moyen de retenue (30, 305) se déplace axialement par rapport au boîtier (21, 308) dans une direction à l'opposé de la direction de sollicitation du moyen de sollicitation de douille (35, 315).

2. Dispositif de retenue selon la revendication 1, caractérisé en ce que le moyen de réglage (80) est adapté à fonctionner également dans un mode de libération pour amener le moyen d'asservissement de sollicitation de douille (82, 318) à contraindre les organes de douille (38, 312) à s'espacer radialement de la paroi interne profilée (26, 310) du boîtier et permettre au moyen de retenue (30, 305) de se déplacer le long du boîtier dans une direction à l'opposé de la direction de sollicitation du moyen de sollicitation de douille (35, 315).

3. Dispositif de retenue selon la revendication 1 ou la revendication 2, caractérisé en ce que le moyen d'asservissement de sollicitation de douille (82, 318) est adapté à déplacer les organes de douille (38, 312) axialement par rapport à l'organe de retenue (33, 306).

4. Dispositif de retenue selon la revendication 3 lorsque rattachée à la revendication 2, caractérisé en ce que le moyen de réglage (80) est placé dans ledit mode de libération pour actionner le moyen de coulisseau (81, 320) pour qu'il exerce une poussée axiale sur l'organe de retenue (33, 306) afin de le déplacer axialement par rapport à la paroi interne (25) du boîtier pour relâcher la pression axiale entre les surfaces profilées mutuellement engagées (40, 26 ; 310, 314) des organes de douille (38) et de la paroi interne du boîtier avant le dégagement radial desdites surfaces profilées.

5. Dispositif de retenue selon la revendication 3 ou la revendication 4, caractérisé en ce que le moyen d'asservissement de sollicitation de douille (82) comprend une chambre d'asservissement annulaire (90), définie dans la cavité de retenue (24) à une extrémité desdits organes de douille (38) et entre ladite paroi interne radialement du boîtier (25) et une paroi externe radialement de l'organe de retenue (33), et un moyen d'alimentation (16, 19) adapté à alimenter en fluide à pression élevée la chambre d'asservissement afin de produire une poussée sur les organes de douille (38) dans ladite direction à l'opposé de la direction de sollicitation du moyen de sollicitation de douille (35).

6. Dispositif de retenue selon l'une quelconque des revendications précédentes, caractérisé en ce que ladite série de projections et d'évidements radiaux alternés (26, 310) à la paroi interne du boîtier et aux organes de douille (40, 314) comprend une série de crêtes et de gorges s'étendant sensiblement perpendiculairement à l'axe longitudinal et définies par un filet de vis hélicoïdal.

7. Dispositif de retenue selon l'une quelconque des revendications précédentes, caractérisé en ce que le moyen de retenue (30) comprend une cavité de réception d'organe allongé s'étendant axialement (23) s'ouvrant à une extrémité de réception (32) pour recevoir un organe allongé (12) fixé au moyen de retenue (30) pour ne pas se déplacer axialement dans une direction, à l'opposé de la direction de sollicitation du moyen de sollicitation de douille (35), vers ladite extrémité de réception, son organe de retenue (33) ayant une forme annulaire entourant ladite cavité de réception d'organe et un moyen de serrage d'organe allongé (45) comprenant un organe de serrage annulaire (47), contenant ladite cavité de réception d'organe allongé et adapté à serrer avec possibilité de libération ledit organe allongé reçu en son sein.

8. Dispositif de retenue selon la revendication 7, caractérisé en ce que l'organe de serrage (47) comprend une pluralité de surfaces (48), agencées selon l'axe longitudinal et inclinées par rapport audit axe (14) dans un sens de manière à augmenter de distance depuis l'axe avec la distance axiale depuis ladite extrémité de réception (32), supportant un élément de roulement (49) sollicité vers ladite extrémité de réception et adapté à être déplacé axialement et radialement par rapport audit axe de manière à empêcher qu'un organe allongé (12) s'étendant le long de ladite ouverture ait un mouvement substantiel relativement à l'organe de serrage vers ladite extrémité de réception en se calant entre lesdites surfaces inclinées et ledit organe allongé.

9. Dispositif de retenue selon la revendication 8, caractérisé en ce que le moyen de serrage (45) comprend un moyen de desserrage (55) comprenant un manchon de libération (56) tapissant ledit organe de serrage (33) et ouvert pour permettre l'extension radiale desdits éléments de roulement (49) entre la surface (48) de l'organe de serrage (47) et un organe allongé reçu (12), et un moyen de déclenchement de desserrage (57) adapté à fonctionner dans un mode de desserrage pour faire glisser le manchon de libération (56) axialement par rapport à l'organe de serrage (47) dans une direction loin de ladite extrémité de réception (32) afin de déplacer lesdits éléments de roulement (49) axialement et, au moyen desdites surfaces inclinées (48), radialement loin de l'axe longitudinal (14), et adapté dans un mode de serrage à autoriser le manchon de libération (56) à glisser axialement par rapport à l'organe de serrage (47) dans une direction inverse afin de permettre auxdits éléments de roulement (49) de se déplacer radialement en contact avec ledit organe allongé reçu (12).

10. Dispositif de retenue selon la revendication 9, caractérisé en ce que le moyen de déclenchement de desserrage (57) comprend au sein de la cavité de retenue (24) un piston de desserrage annulaire (58) s'étendant radialement entre le manchon de libération (56) et la paroi interne radialement (25) du boîtier, une chambre de desserrage annulaire (59) définie entre le piston de desserrage (58) et l'extrémité (21₂) de la cavité de retenue (24), et un moyen d'alimentation (16, 19, 60) adapté dans ledit mode de desserrage à alimenter en fluide à pression élevée ladite chambre de desserrage (59) afin d'amener ledit le piston de desserrage (58) et ledit manchon de libération (56) à glisser axialement loin de l'extrémité de réception (32), et adapté dans ledit mode de serrage à relâcher la pression de fluide dans la chambre de desserrage (59) afin de permettre audit piston de desserrage (58) et audit manchon de libération (56) de glisser axialement dans une direction vers ladite extrémité de réception (32).

11. Dispositif de retenue selon l'une quelconque des revendications 7 à 10, caractérisé en ce que l'organe de serrage (47) est adapté à glisser axialement par rapport à l'organe de retenue tout autour et est couplé à celui-ci dans une direction axiale par un moyen de ressort de précontrainte (53).

12. Dispositif de retenue selon la revendication 11, caractérisé en ce que le moyen de réglage (80) est adapté, dans ledit mode de réglage, à amener le moyen de coulisseau (81) à déplacer l'organe de retenue (33) axialement par rapport à l'organe de serrage (47) pour mettre ledit moyen de ressort de précontrainte (53) en compression axiale et supprimer la poussée du coulisseau tout en permettant aux organes de douille (38) d'engager la paroi (25, 26) du boîtier afin de limiter l'organe de retenue (33) axialement par rapport au boîtier (21) avec ledit moyen de ressort de précontrainte (53) en compression.

13. Dispositif de retenue selon la revendication 11 ou la revendication 12, caractérisé en ce que le moyen de ressort de précontrainte (53) comprend au moins une pile d'anneaux (92, 93), chaque anneau ayant ses faces s'étendant radialement (92_{1L,} 92₁ᵤ) inclinées l'une par rapport à l'autre et lesdites faces inclinées d'anneaux adjacents inclinées dans des directions opposées et butant les unes contre les autres sur au moins une partie de la circonférence des anneaux.

14. Dispositif de retenue selon l'une quelconque des revendications 7 à 13, caractérisé en ce que la cavité de réception d'organe allongé (23) définit un espace annulaire (61) à l'extrémité de la cavité de retenue (24) autour d'un organe allongé reçu et comprend, dans ladite cavité de retenue, un moyen d'étanchéité (62) comprenant un élément d'étanchéité annulaire (63) disposé dans la cavité de retenue adjacent audit espace pour permettre la réception d'un organe allongé (12) dans le boîtier et un moyen d'actionnement d'élément d'étanchéité (65) adapté à appliquer une poussée dirigée axialement sur l'élément d'étanchéité (63) afin de comprimer l'élément axialement et radialement par rapport à l'axe longitudinal, le moyen d'actionnement d'élément d'étanchéité comprenant un manchon d'actionnement (66), un piston d'actionnement (58) s'étendant radialement entre la paroi interne radialement (25) du boîtier et le manchon d'actionnement, une chambre d'actionnement d'élément d'étanchéité, limitée dans une direction axiale vers ledit élément d'étanchéité par ledit piston, et un moyen d'alimentation (84, 19, 16) adapté à alimenter en fluide à pression élevée la chambre (83) afin de déplacer le manchon axialement contre l'élément d'étanchéité.

15. Dispositif de retenue selon l'une quelconque des revendications 7 à 14, caractérisé en ce que le boîtier comprend un moyen d'étanchéité principal actionnable annulaire (70) disposé axialement vers l'intérieur du moyen de retenue (30) et adapté à être actionné après le réglage du moyen de retenue (30) par rapport au boîtier (21) et un organe allongé (12) s'étendant en son sein pour créer une étanchéité annulaire entre l'organe allongé et le boîtier.

16. Dispositif de retenue selon la revendication 15, caractérisé en ce que le moyen d'étanchéité principal actionnable comprend un élément d'étanchéité principal déformable annulaire (71₁, 71₂) disposé au sein de la cavité de retenue (24) et un piston d'actionnement d'élément d'étanchéité principal annulaire (75) adapté à être déplacé axialement, réagissant au fluide à pression élevée pour être déplacé axialement par rapport au boîtier (21) afin de déformer l'élément d'étanchéité principal dans tout espace annulaire pour remplir la cavité de réception d'organe allongé entre l'organe allongé reçu et le boîtier.

17. Dispositif de retenue selon l'une quelconque des revendications 5, 10, 14 ou 16, ou toute revendication rattachée, caractérisé en ce que chaque chambre de fluide (59, 83, 90, 76, 77) est reliée à un raccord de fluide détachable commandé à distance (60, 84, 91, 76₂, 77₂) à la paroi du boîtier et chaque moyen d'alimentation en fluide à pression élevée est éloigné du boîtier (21).

18. Dispositif de raccordement (15) pour deux organes allongés alignés axialement (11, 12) caractérisé en ce qu'il comprend un dispositif de retenue (20₁, 20₂) selon l'une quelconque des revendications 7 à 17, dans lequel le boîtier (21) est agencé de manière à loger lesdits organes allongés dans ses extrémités opposées, chaque extrémité du boîtier étant associée, dans une cavité de retenue individuelle (24), à un moyen de retenue (30) et un moyen de réglage (80) individuels adaptés à retenir chaque organe allongé individuellement par rapport au boîtier, et ledit moyen de réglage individuel (80) est adapté à être actionné simultanément de manière que les forces qu'il exerce axialement sur le dispositif de retenue (20₁, 20₂) réagissent l'une contre l'autre dans le boîtier.

19. Dispositif terminal (100, 200) pour un organe allongé (112, 212) comprenant un dispositif de retenue (130, 230) selon l'une quelconque des revendications 7 à 17, caractérisé en ce que le boîtier (120, 220), loin de ladite extrémité de réception, s'étend radialement vers l'intérieur de l'ouverture de réception d'organe allongé vers ledit axe longitudinal (114, 214) pour former un épaulement de réception (125,225) d'organe allongé et s'étendant vers l'extérieur pour former une bride (222) ou un équivalent pour une fixation à un autre corps.

20. Dispositif terminal de tuyau (100) comprenant un dispositif de retenue selon la revendication 15 ou la revendication 16, dans lequel le boîtier, loin de ladite extrémité de réception, s'étend radialement vers ledit axe longitudinal pour constituer une butée et une paroi de fermeture (126) pour l'extrémité d'un tuyau reçu dans l'ouverture de réception d'organe allongé et former un épaulement de réception (125) pour réagir à la poussée axiale dans le boîtier produite par le moyen de coulisseau dans le tuyau (112).
